Europäisches Patentamt

European Patent Office

Office européen des brevets

(19)

(11) **EP 0 929 598 B1**

(12) **EUROPÄISCHE PATENTSCHRIFT**

(45) Veröffentlichungstag und Bekanntmachung des Hinweises auf die Patenterteilung:
**10.09.2003 Patentblatt 2003/37**

(21) Anmeldenummer: **97909308.5**

(22) Anmeldetag: **23.09.1997**

(51) Int Cl.⁷: **C08J 5/18**, B29C 55/12

(86) Internationale Anmeldenummer:
**PCT/EP97/05208**

(87) Internationale Veröffentlichungsnummer:
**WO 98/013415 (02.04.1998 Gazette 1998/13)**

(54) **BIAXIAL ORIENTIERTE PET-FOLIE MIT VERBESSERTEN MECHANISCHEN UND SCHRUMPFEIGENSCHAFTEN ZUR VERWENDUNG FÜR SMD-FÄHIGE FOLIENKONDENSATOREN UND VERFAHREN ZUR HERSTELLUNG DIESER FOLIE**

BIAXIALLY ORIENTED PET FOIL WITH ENHANCED MECHANICAL AND SHRINKING PROPERTIES FOR USE AS SMD FOIL CONDENSERS AND METHOD FOR THE PRODUCTION OF SAID FOIL

FEUILLE DE PET A ORIENTATION BIAXIALE PRESENTANT DES PROPRIETES MECANIQUES ET DE RETRAIT AMELIOREES A UTILISER POUR DES CONDENSATEURS A FEUILLES APTES AU MONTAGE EN SURFACE, ET PROCEDE DE PRODUCTION DE CETTE FEUILLE

(84) Benannte Vertragsstaaten:
**DE FR IT LU**

(30) Priorität: **24.09.1996 DE 19639056**
**21.08.1997 DE 19736394**
**21.08.1997 DE 19736398**

(43) Veröffentlichungstag der Anmeldung:
**21.07.1999 Patentblatt 1999/29**

(73) Patentinhaber: **Mitsubishi Polyester Film GmbH**
**65203 Wiesbaden (DE)**

(72) Erfinder:
• **KURZ, Rainer**
  **D-65232 Taunusstein (DE)**
• **KLIESCH, Holger**
  **D-55252 Mainz-Kastel (DE)**
• **BENNETT, Cynthia**
  **D-55232 Alzey (DE)**

• **BURSCH, Annegrete**
  **D-65385 Rüdesheim (DE)**
• **HORA, Franz**
  **D-65830 Kriftel (DE)**
• **KUHMANN, Bodo**
  **D-65594 Runkel (DE)**
• **SCHALLER, Ulrich**
  **D-65439 Flörsheim-Wicker (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:
**EP-A- 0 225 631**     **EP-A- 0 228 601**
**EP-A- 0 402 861**     **US-A- 4 042 569**
**US-A- 4 985 537**     **US-A- 5 545 364**

## Beschreibung

Die vorliegende Erfindung betrifft Polyesterfolien, insbesondere PET-Folien, die aufgrund ihrer verbesserten Schrumpfeigenschaften sich besonders zur Herstellung von Kondensatoren für die SMD-Technik eignen. Insbesondere für Kondensatoren, die in der SMD-Technik verwendet werden, benötigt man Folien mit geringer Dicke und Temperaturbeständigkeit. Dies bringt Vorteile bei der Raumnutzung des Kondensators und beim Lötvorgang.

Eingesetzt werden zur Zeit PEN- und PPS-Folien für Folienkondensatoren in der SMD-Technik. PEN- und PPS-Folien haben einen deutlich höheren Schmelzpunkt, PEN ca. 265 °C und PPS ca 285 °C, als PET-Folien (ca. 255 °C), und haben deshalb eine andere Schrumpfcharakteristik. Von entscheidendem Nachteil sind jedoch die hohen Kosten solcher PEN- und PPS-Folien Es ist bekannt, daß z.Zt. auf dem Markt erhältliche PET-Folien zur Herstellung von Kondensatoren für die SMD-Technik nicht oder nur sehr bedingt unter besonderen Randbedingungen, wie z.B. mit Kapsel oder durch Reduzieren der maximal erlaubten Löttemperaturen auf ca. 200 °C geeignet sind. Die PET-Kondensatoren sind nach der zur Herstellung benötigten Temperung mechanisch instabil.

Damit PET-Folien die benötigte Wärmestabilität besitzen, dürfen eine Reihe von Eigenschaften (u.a. der Schrumpf besonders in Querrichtung bei hohen Temperaturen) bestimmte Bereiche nicht verlassen, um die Lötbadbeständigkeit der Kondensatoren zu gewährleisten

Nach JP-B-63/004499 (Toray) werden bei biaxial orientierten Polyesterfolien niedrige Schrumpfwerte dadurch eingestellt, daß zusätzlich ein weiterer Wärmebehandlungsschritt durchgeführt wird. In EP-A-0 402 861 (DHC) und JP-A-63/011326 (Toray) werden Folien mit einem sehr niedrigen Längsschrumpf beschrieben Beschrieben wird in EP-A-0 402 861 ein erster Temperschritt bei 225 °C bis 260 °C mit einer Relaxation von 1 bis 15 % und anschließender, zweiter Relaxation von 0,01 bis 10 % bei Temperaturen unterhalb von 180 °C. Diese Folien sind deshalb nachteilig, weil der dort beschriebene Längsschrumpf so gering ist, daß die daraus hergestellten Kondensatoren nicht genug verfestigt sind. Daraus resultiert ein schlechter Isolationswiderstand.

Aufgabe der vorliegenden Erfindung war es nun, eine SMD-taugliche PET-Folie zur Verfügung zu stellen, die die oben beschriebenen Nachteile nicht aufweist. Die aus der Folie hergestellten Kondensatoren sollen nach der Temperung mechanisch stabil sowie lötbadbestandig sein.

Diese Aufgabe wird gelöst durch eine ein- oder mehrschichtige biaxial orientierte Folie mit einer Dicke von $\leq$ 10 µm, bei der der mechanische Verfestigungskoeffizient MV nach der folgenden Gleichung die unten angegebenen Bereiche nicht verläßt:

$$V = \frac{S200_{TD}[\%](T2\% - 100[^\circ C])(S200_{MD} - 3.35[\%])}{(E_{TD} - 3000[N/mm^2])} \cdot 1000\ [^\circ C \bullet mm^2 \bullet N^{-1}]$$

MV ist dabei $\geq$ -2, bevorzugt $\geq$ 0, insbesondere > 0 5 besonders bevorzugt $\geq$ 1 und MV ist $\leq$ 50, bevorzugt $\leq$ 30 und besonders bevorzugt $\leq$ 5

Außerdem darf maximal einer der Koeffizienten $S200_{TD}$, $(T2\%-100)$, $(S200_{MD}-3,35)$ und $(E_{TD} - 3000)$ negativ sein.

S $200_{TD}$ ist der Schrumpf in Querrichtung (=TD=Transverse Direction) bei 200 °C nach 15 min in %.

S $200_{MD}$ ist der Schrumpf in Längsrichtung (=MD=Machine Direction) bei 200 °C nach 15 min in %.

T2% ist die Temperatur in °C bei der sich die Folie unter einem konstanten Zug von 5 N/mm$^2$ um 2 % ausdehnt.

$E_{TD}$ ist das E-Modul (tensile modulus) in Querrichtung bei Raumtemperatur (21 °C) in N/mm$^2$

Die erfindungsgemäße Folie besitzt eine Dicke von $\leq$ 10 µm, vorzugsweise $\leq$ 8 µm und insbesondere von $\leq$ 6 µm.

Für die Eignung einer Folie zur Herstellung von SMD-Kondensatoren sind 2 Prozeßschritte von besonderer Bedeutung. Dies ist einmal das Wickeln der Räder mit anschließendem Tempern zur Verfestigung der Kondensatoren und auf der anderen Seite die Wärmebeständigkeit der Kondensatoren während des Lötprozesses. Es hat sich gezeigt, daß die Wärmebeständigkeit, insbesondere die Dimensionsstabilität, der fertigen Kondensatoren entscheidend von den Schrumpfeigenschaften der Folie in MD und TD abhängt Hier gilt, je niedriger der Schrumpf bei hohen Temperaturen (200 °C) in MD und TD desto besser die Wärmebeständigkeit. Niedrige Schrumpfwerte führen daher zu den gewunschten kleinen Werten für MV in der obigen Formel. Der Schrumpf ist aber auf der anderen Seite wichtig für die Verfestigung der Wickelräder während des Temperschrittes. Werden die Wickel nicht ausreichend verfestigt, dann haben die resultierenden Kondensatoren ungenügende Isolationswiderstände und inakzeptabel hohe Werte für den dielektrischen Verlustfaktor tanδ. Für die SMD-Eignung ist also eine Balance zwischen besonders niedrigem und noch ausreichendem Schrumpf notwendig. Zu der genannten Verfestigung tragen sowohl der Querschrumpf als auch der Längsschrumpf bei. Der Beitrag des Langsschrumpfes ist dabei aber ungleich wichtiger. Ein niedriger Querschrumpf kann daher eher toleriert werden, als ein zu niedriger Längsschrumpf. Es haben sich Werte für $S200_{MD}$ von kleiner als 3,35 % als sehr ungünstig erwiesen. Daher wird der Koeffizient in der Formel bei niedrigeren Schrumpfwerten negativ und führt MV aus dem idealen Bereich.

Bei S200 $_{TD}$ haben sich Werte von kleiner gleich 1 % als besonders günstig erwiesen, wobei Werte von kleiner 0,8 % zu bevorzugen sind.

Die Verfestigung des Lagenpakets wird aber nicht nur vom Schrumpf bestimmt sondern auch von anderen, insbesondere mechanischen. Eigenschaften der Folie. Der durch den Wickelzug und den Längsschrupf erzeugte Druck auf die Lagen führt zu einer Ausdehnung der Folie und damit zur Verfestigung. Diese Ausdehnung ist z.B. abhängig vom E-Modul bei der jeweiligen Temperatur, da eine Folie mit hoher mechanische Festigkeit weniger leicht auszudehnen ist als eine Folie mit einem niedrigeren E-Modul Die Neigung der Folie sich unter Druck und bei einer bestimmten Temperatur in Querrichtung auszudehnen kann man am besten Messen, indem man nicht Druck ausübt, sondern mit einer konstanten niedrigen Kraft einen Zug auf die Folie überträgt. Für die Eigenschaften der Folie hat es sich dabei als günstig erwiesen, wenn die Folie bei einem Zug von 5 N/mm$^2$ bei einer möglichst geringen Temperatur eine Längung von mindestens 2 % (T2%) zeigt (Diese Temperatur liegt für Standardkondensatorfolien bei über 150 °C und bei den erfindungsgemäßen Folien idealerweise zwischen 100 und 140 °C. besser sogar zwischen 100 und 130 °C). D h., daß der bei der Temperung auftretende Lagendruck schon frühzeitig zu einer Verfestigung der Lagen führt Problematisch ist es jedoch, wenn die Längung von 2 % schon bei sehr niedrigen Temperaturen unter 100 °C auftritt. Dann muß die Tempertemperatur reduziert werden, was wiederum die Lötbadbeständigkeit deutlich verschlechtert.

Niedrige Werte für T2% konne z B. durch niedrige E-Module in Querrichtung erreicht werden. Sehr niedrige Werte, die deutlich unter 4000 N/mm$^2$ liegen sind aber wiederum ungünstig. Solche E-Module haben zwar keinen direkten negativen Einfluß auf die SMD-Eignung, führen aber allgemein zu einer Verschlechterung der elektrischen Eigenschaften der Folie. Dieser Tatsache trägt die Berücksichtigung des E-Moduls in der obigen Formel Rechnung.

Die Dichte des zur Folienherstellung verwendeten Polyesters liegt zweckmäßigerweise zwischen 1,385 und 1,410 g/cm$^3$. Folien mit Werten oberhalb von 1,410 sind tendenziell zu kristallin und könnten bei der Kondensatorherstellung zu einer Sprödigkeit der Folie und damit gegebenenfalls zum Ausfall des Kondensators führen. Liegt die Dichte unterhalb von 1,385, so könnte der Schrumpf der Folie zu hoch bzw. das E-Modul könnte zu gering sein, bzw. die Hydrolyseempfindlichkeit zu hoch sein.

Die erfindungsgemäße Folie wird vorzugsweise aus Polyesterrohstoffen hergestellt. Unter Polyesterrohrstoffen werden Zusammensetzungen verstanden, die zum überwiegenden Teil, d.h. zu mindestens 80 Gew.-%, bevorzugt mindestens 90 Gew.-%, aus einem Polymer, ausgewählt aus der Gruppe Polyethylenterephthalat (PET), Polyethylennaphthalt (PEN), Poly-1,4-dicyclohexandimethylenterephthalat (PCT), Polyethylennaphthalatbibenzoat (PENBB) und Mischungen dieser Polymere bestehen. Bevorzugt sind Polyesterrohstoffe, die im wesentlichen aus Ethylenterephthalateinheiten und/oder bis 50 Mol-% aus Comonomereinheiten aufgebaut sind, wobei eine Variation in der Glykol- und/oder der Säurekomponente der Comonomereinheiten möglich ist Die Herstellung der Polyester kann sowohl nach dem Umesterungsverfahren mit den üblichen Katalysatoren, wie z.B. Zn-, Ca-, Li- und Mn-Salzen als auch nach dem Direktveresterungsverfahren erfolgen.

Der Polyesterrohstoff enthält gegebenenfalls die zur Herstellung von Kondensatorfolien zur Verbesserung der Schlupf- und Gleiteigenschaften üblichen Additive (Partikel), z.B. anorganische Pigmente wie Kaolin, Talk, SiO$_2$ MgCO$_3$, CaCO$_3$ BaCO$_3$ CaSO$_4$, BaSO$_4$, LiPO$_4$, Ca$_3$(PO$_4$)$_2$, Mg$_3$(PO$_4$)$_2$, TiO$_2$, Al$_2$O$_3$, MgO, SiC,LiF oder die Ca-, Ba-, Mn-Salze der Terephthalsaure. Es konnen allerdings auch Teilchen auf Basis vernetzter, unschmelzbarer, organischer Polymeren wie z B. Polystyrole, Polyacrylate, Polymethacrylate zugesetzt werden. Bevorzugt werden die Partikel in einer Konzentration von 0,005 bis 5,0 Gew.-%, besonders bevorzugt in einer Konzentration von 0,01 bis 2,0 Gew -% (bezogen auf das Gewicht der Schicht) eingesetzt. Die durchschnittliche Teilchengröße beträgt 0,001 bis 10 μm, bevorzugt 0,005 bis 5 μm.

Die Polyesterfolien können nach bekannten Verfahren aus oben beschriebenen Rohstoffen oder in Kombination obiger Polyesterrohstoffe mit weiteren Rohstoffen oder üblichen Additiven in üblicher Menge von 0,1 bis maximal 10 Gew.-% sowohl als Monofolien als auch als mehrschichtige, gegebenenfalls coextrudierte Folien mit gleichen oder unterschiedlich ausgebildeten Oberflächen hergestellt werden, wobei eine Oberflache beispielsweise pigmentiert ist und die andere Oberfläche kein Pigment enthält. Ebenso können eine oder beide Oberflächen der Folie nach bekannten Verfahren mit einer ublichen funktionalen Beschichtung versehen werden.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt Diese Folie wird anschließend erneut erhitzt und in Längs- und Querrichtung bzw. in Quer- und in Langsrichtung bzw. in Längs-, in Quer- und nochmals in Längsrichtung und/oder Querrichtung gestreckt. Die Strecktemperaturen liegen im allgemeinen bei T$_g$+10°C bis T$_g$+60°C, das Streckverhältnis der Längsstreckung liegt üblicherweise bei 2 bis 6, insbesondere bei 3 bis 4,5, das der Querstreckung bei 2 bis 5, insbesondere bei 3 bis 4,5 und das der gegebenenfalls durchgerührten zweiten Längsstreckung bei 1,1 bis 3 Die erste Längsstreckung kann gegebenenfalls gleichzeitig mit der Querstreckung (Simultanstreckung) durchgeführt werden. Je nach Bauart der verwendeten Streckanlage sind die bekannten Einflußgrößen Streckverhältnis, -temperatur und -geschwindigkeit so aufeinander abzustimmen, daß die Meßgrößen E-Modul, Schrumpf und T2% in den gewünschten Bereichen liegen Günstig sind dabei eher niedrige Streckverhältnisse in Querrichtung (< 4) und mittlere bis hohe (>3,6) Streckverhältnisse in Längsrichtung In Kombination mit den unten angegebenen Fixiertemperaturen und Relaxationen. lassen sich die gewünschten Werte bspw. durch ein Querstreckverhältnis von 3.6 - 4,0, bevorzugt 3,7 - 3.9, besonders bevorzugt um 3,8 und ein Längsstreckverhaltnis von 3,6 - 4,2, bevorzugt 3,7 - 4,0, besonders bevorzugt um 3,9 einstellen.

Anschließend folgt die Thermofixierung der Folie bei Ofentemperaturen von 200 bis 260 °C, insbesondere bei 220 bis 250 °C. Entscheidend fur die Herstellung der erfindungsgemäßen Folie ist das tatsächliche Temperaturerlebnis der Folie und nicht die Umgebungstemperatur im Herstellungsprozeß Beispielsweise kann bei sehr hohen Geschwindigkeit der Produktionsmaschine die Ofentemperatur, d h die Umgebungstemperatur, erheblich uber der Temperatur liegen, die die Folie tatsächlich beim Durchlaufen dieses Ofens erfährt Die maximale Temperatur, die die Folie während ihres Herstellungsprozesses tatsächlich erlebt, läßt sich mittels DSC-Analyse an einer fertigen Folie ermitteln (= maximales Temperaturerlebnis = Folienfixierpeak). Diese Temperatur sollte zwischen 225 und 245 °C liegen, bevorzugt zwischen 230 und 240 °C.

In der Fixierzone wird die Folie in Querrichtung um insgesamt 5 bis 15% relaxiert. Entscheidend ist neben dieser Gesamtrelaxation von 5-15% die Relaxationsgeschwindigkeit, die erfindungsgemäß bei < 20 %/s liegt. Dies ist von Bedeutung für die Einstellung des Schrumpfes in Querrichtung. Die Relaxationsgeschwindigkeit ist der Quotient aus der Relaxation in % und der Zeit in s. in der die Relaxation stattfindet.

Die Relaxation kann in mehreren diskreten Schritten, aber auch in einem Schritt erfolgen, wobei die Relaxation in mehreren Schritten, insbesondere über eine längere Strecke bevorzugt wird. Besonders gunstig ist dabei eine Relaxationsgeschwindigkeit von < 5 %/s, wobei ein möglichst großer Teil der Relaxation bei Temperaturen < 233 °C, besser sogar bei Temperaturen < 210 °C stattfinden sollte. Mindestens 0,7 % Relaxation sollten bei Temperaturen < 210 °C stattfinden. Hohe Relaxationsgeschwindigkeiten und hohe Relaxationstemperaturen führen zu einer geringeren Reduktion des Querschrumpfes bei gleichzeitiger deutlicher Reduktion des Längsschrumpfes, was aus den erwähnten Gründen ungünstig ist. Die Höhe der Gesamtrelaxation muß wiederum individuell für jede Produktionsanlage so gewählt werden, daß die angegebenen Meßgrößen im beanspruchten Bereich liegen. Bei einer Gesamtrelaxation von 8 % in Kombination mit einer Fixiertemperatur von 230°C, ist eine Relaxationsgeschwindigkeit von 3 % /s geeignet um die gewünschten Werte für MV zu erreichen.

Anschließend wird die Folie abgekühlt und aufgewickelt. Das hier beschriebene Verfahren zur Herstellung von Polyesterfolien mit reduziertem Querschrumpf ist nicht nur auf Polyester sondern auch auf andere thermoplastische Polymere anwendbar.

Nachfolgend ist die Erfindung anhand von Beispielen näher erläutert.

**Beispiele**

Zur Charakterisierung der erhaltenen Folien dienten die folgenden Meßmethoden

**Schrumpf**

Der Thermische Schrumpf wurde an 10 cm großen Quadraten bestimmt Die Proben werden genau ausgemessen ($L_0$) und 15 Minuten in einem Umlufttrockenschrank bei der jeweils angegebenen Temperatur getempert. Die Proben werden entnommen und bei Raumtemperatur genau ausgemessen (L).

$$\text{Schrumpf (\%)} - \frac{L_0\text{-}L}{L_0} \cdot 100$$

**Temperatur bei Längung um 2% (T2%)**

Zur Bestimmung der Temperatur T2%, bei der die Längung der Folie mindestens 2 % beträgt, wird die TMA-Analyse mit einem Gerät der Fa. Mettler (TMA40) durchgeführt. Die Längung in % der 10 mm x 6 mm großen Proben wird bei einer Heizrate von 4 K/min und einer konstanten Kraft von 5 mN/mm$^2$ gemessen. Die Temperatur liegt zu Beginn der Messung bei 30 °C.

**Dichte**

Dichten werden in Übereinstimmung mit ASTM D 1505-68 durch Eintauchen von Proben in Dichtegradientensäulen bestimmt. Zur Herstellung der Dichtegradientensäule werden Gemische aus CCl$_4$/Heptan verwendet.

**E-Modul**

Das E-Modul wird mit dem Zug-Dehnungs-Meßgerat Z010 der Firma Zwick bestimmt. Das E-Modul ist der Quotient aus der auf den Anfangsquerschnitt bezogenen Kraft und der auf seine Ürsprungslänge bezogenen Längenveränderung bei Verformung innerhalb des Hookschen Bereiches. Die Meßstreifen sind 15 mm breit und die Meßlänge beträgt 100 mm. Es wird bei einer Temperatur von 21 °C mit einer Abzugsgeschwindigkeit von 1 mm/min gemessen.

**Beispiel 1**

PET-Chips werden bei 160 °C getrocknet und bei 280 bis 310 °C extrudiert. Das geschmolzene Polymer wird aus einer Schlitzdüse extrudiert und auf eine Walze elektrostatisch angelegt. Der Film wird um den Faktor 3,8 in Maschinenrichtung bei 115 °C gestreckt. In einem Rahmen erfolgt bei 120 °C eine Querstreckung um den Faktor 3,8. Anschließend wird die Folie thermofixiert, das maximale Temperaturerlebnis der Folie liegt bei 231 °C. Die Folie wird in gleichmäßigen Schritten in Querrichtung 8 % mit einer Relaxationsgeschwindigkeit von 2,5 %/s relaxiert.

**Beispiel 2**

Eine Folie wird nach dem Verfahren gemäß Bsp. 1 hergestellt Der Folienfixierpeak liegt jedoch bei 237 °C und das Querstreckverhältnis bei 3,7

**Vergleichsbeispiel 1**

Eine biaxial orientierte Folie wird wie in Beispiel 1 beschrieben hergestellt, mit dem Unterschied, daß die Folie bei 210 °C (= Folienfixierpeak) thermofixiert wird.

**Vergleichsbeispiel 2**

Eine biaxial orientierte Folie wird wie in Beispiel 1 beschrieben hergestellt, jedoch ohne Relaxation der Folie in Querrichtung

**Vergleichsbeispiel 3**

Eine biaxial orientierte Folie wird wie in Beispiel 1 beschrieben hergestellt, jedoch wird die Folie in Querrichtung mit 2,0 % relaxiert.

**Vergleichsbeispiel 4**

Eine biaxial orientierte Folie wird wie in Beispiel 1 beschrieben hergestellt, der Folienfixierpeak liegt jedoch diesmal bei 241 °C und die Folie wird in Querrichtung 10 % relaxiert.

Aus den Folien werden Schichtkondensatoren gefertigt. Diese werden nach der Temperung hinsichtlich ihrer Qualität beurteilt. Als Qualitätskriterien werden dabei der Ausfall wegen Isolationswiderstand, $\Delta$C, dielektrischem Verlustfaktor und Spannungsfestigkeit herangezogen.

Nach dieser Beurteilung werden die Kondensatoren einem für Reflow-Loten geeignetem Temperaturprofil ausgesetzt. Die Peaktemperatur liegt dabei bei 235 °C. Danach werden die Kondensatoren hinsichtlich ihrer Lotbadbestandigkeit nach den selben Kriterien wie nach der Temperung beurteilt.

In Tabelle 1 sind die Eigenschaften der Folien aus den Beispielen zusammengefaßt.

## Tabelle 1

| Folientyp | E-Modul (TD) in N/mm² | T2% in °C | S 200 (TD) % | S 200 (MD) % | Anzahl negativer Koeffizienten | MV in °C mm² N⁻¹ | Qualität der Kondensatoren nach Temperung | Lötbadbeständigkeit des Kondensators |
|---|---|---|---|---|---|---|---|---|
| Beispiel 1 | 4900 | 117 | 0,6 | 3,7 | 0 | 2 | + | + |
| Beispiel 2 | 4500 | 116 | 0,4 | 3,6 | 0 | 1,1 | + | + |
| Vergleichsbeispiel 1 | 5250 | 150 | 1,7 | 6,2 | 0 | 110 | + | - |
| Vergleichsbeispiel 2 | 5650 | 167 | 7,4 | 3,9 | 0 | 104 | + | - |
| Vergleichsbeispiel 3 | 5300 | 153 | 4,1 | 5,5 | 0 | 207 | + | - |
| Vergleichsbeispiel 4 | 4500 | 115 | -0,1 | 3,0 | 2 | 0,4 | - | + |

EP 0 929 598 B1

**EP 0 929 598 B1**

**Patentansprüche**

1. Ein- oder mehrschichtige biaxial orientierte PET-Folie mit einer Dicke von ≤ 10 µm, wobei der mechanische Verfestigunskoeffizient MV nach der folgenden Gleichung bestimmt wird:

$$MV = \frac{S200_{TD}[\%](T2\%\text{-}100[°C])(S200_{MD}\text{-}3.35[\%])}{(E_{TD}\text{-}3000[N/mm^2])} * 1000 \ [°C·mm^2·N^{-1}]$$

und wobei

MV ≥ -2 and ≤ 50 und

$S200_{TD}$ der Schrumpf in Querrichtung bei 200 °C nach 15 min in %,

$S200_{MD}$ der Schrumpf in Längsrichtung bei 200 °C nach 15 min in %,

T2% dei Temperatur in °C bei der sich die Folie unter einem konstanten Zug von 5 N/mm² um 2% ausdehnt und $E_{TD}$ das E-Modul (tensile modulus) in Querrichtung bei Raumtemperatur (21 °C) in N/mm² ist und wobei maximal einer der Koeffizienten $S200_{TD}$, (T2%-100 °C), ($S200_{MD}$-3.35 %) oder ($E_{TD}$-3000 N/mm²) negativ ist.

2. Folie nach Anspruch 1, **dadurch gekennzeichnet, dass** der Querschrumpf bei 200 °C ($S200_{TD}$) ≤ 1 % ist.

3. Folie nach einem oder mehreren der Ansprüche 1 oder 2, **dadurch gekennzeichnet, dass** eine oder beider Oberflächen der Folie mit einer funktionalen Schicht beschichtet sind.

4. Verfahren zur Herstellung einer thermoplastischen PET-Folie, wobei eine aufgeschmolzene PET-Schmelze auf eine Kühlwalze extrudiert und anschließend sequentiell in Längs- und dann in Querrichtung oder in Querund dann in Längsrichtung oder simultan in Längs- und in Querrichtung gestreckt und gegebenenfalls daran anschließend nochmals in Längsund/oder in Querrichtung gestreckt wird und anschließend bei 200 bis 260 °C thermofixiert wird, wobei die Folie während der Thermofixierung mit einer Relaxationsgeschwindigkeit von < 20 %/s um 5 - 15 % in Querrichtung relaxiert wird und wobei die Folie während der Herstellprozesses ein Temperaturerlebnis im Bereich von 225 bis 240 °C (gemessen mittels DSC-Analyse an der fertigen Folie) erfährt.

5. Verfahren nach Anspruch 4, **dadurch gekennzeichnet, dass** die Relaxationsgeschwindigkeit < 10 %/s ist.

6. Verfahren nach Anspruch 5, **dadurch gekennzeichnet, dass** die Relaxationsgeschwindigkeit < 5 %/s ist.

7. Verwendung einer Folie nach einem der Ansprüche 1 bis 3 zur Herstellung von Kondensatoren.

8. Verwendung nach Anspruch 7 zur Herstellung von SMD-Kondensatoren.

**Claims**

1. A biaxially oriented PET film having one or more layers and a thickness of ≤ 10 µm, where the mechanical consolidation coefficient MC is determined from the following equation

$$MC = \frac{S200_{TD}[\%](T2\%\text{-}100[°C])(S200_{MD}\text{-}3.35[\%])}{(E_{TD}\text{-}3000[N/mm^2])} * 1000 \ [°C·mm^2·N^{-1}]$$

and where

MC is ≥ -2 and ≤ 50, and

$S200_{TD}$ is the transverse shrinkage in % after 15 min at 200°C,

$S200_{MD}$ is the longitudinal shrinkage in % after 15 min at 200°C,

T2% is the temperature in °C at which the film elongates by 2% under a constant tension of 5 N/mm², and $E_{TD}$ is the transverse modulus of elasticity (tensile modulus) at room temperature (21°C) in N/mm² and where not more than one of the coefficients $S200_{TD}$, (T2%-100°C), ($S200_{MD}$-3.35%) or ($E_{TD}$-3000 N/mm²) is negative.

2. The film as claimed in claim 1, wherein the transverse shrinkage at 200°C ($S200_{TD}$) is ≤ 1%.

3. The film as claimed in one or more of claims 1 or 2, wherein one or both surfaces of the film have been coated with a functional layer.

4. A process for producing a thermoplastic PET film, where a PET melt is extruded onto a chill roll and then sequentially stretched longitudinally and then transversely, or transversely and then longitudinally, or simultaneously longitudinally and transversely, and, if desired, is then again stretched longitudinally and/or transversely, and is then heat-set at from 200 to 260°C, where the film is relaxed by from 5 - 15% transversely during the heat-setting at a rate of relaxation of < 20%/s, and where the maximum temperature experienced by the film during the production process is in the range from 225 to 240°C (measured by DSC analysis on the finished film).

5. The process as claimed in claim 4, wherein the rate of relaxation is < 10%/s.

6. The process as claimed in claim 5, wherein the rate of relaxation is < 5%/s.

7. The use of a film as claimed in any of claims 1 to 3 for producing capacitors.

8. The use as claimed in claim 7 for producing SMD capacitors.

## Revendications

1. Film de PET à une ou plusieurs couches, orienté dans le sens biaxial, avec une épaisseur ≤ 10 μm, le coefficient de durcissement mécanique MV étant déterminé selon l'équation suivante :

$$MV = \frac{S200_{TD}[\%](T2\% - 100[°C])(S200_{MD} - 3.35[\%])}{(E_{TD} - 3000[N/mm^2])} * 1000 \ [°C \cdot mm^2 \cdot N^{-1}]$$

et
MV étant ≥ -2 et ≤ 50 et
$S200_{TD}$ le retrait dans le sens transversal à 200 °C après 15 minutes en %,
$S200_{MD}$ le retrait dans le sens longitudinal à 200 °C après 15 minutes en %,
T2 % la température en °C à laquelle le film se détend de 2 % avec une traction constante de 5 N/mm² et
$E_{TD}$ le module d'élasticité (tensile modulus) dans le sens transversal à la température ambiante (21 °C) en N/mm²
et au maximum l'un des coefficients $S200_{TD}$, (T2 %-100 °C), ($S200_{MD}$-3.35 %) ou ($E_{TD}$ - 3000 N/mm²) étant négatif.

2. Film selon la revendication 1, **caractérisé en ce que** le retrait transversal étant ≤ 1 % à 200 °C ($S200_{TD}$).

3. Film selon l'une quelconque ou plusieurs des revendications 1 ou 2, **caractérisé en ce que** une ou les deux surfaces du film sont recouvertes avec une couche fonctionnelle.

4. Procédé pour la fabrication d'un film PET thermoplastique, une masse de PET fondue étant extrudée sur un cylindre de refroidissement, étirée ensuite de façon séquentielle dans le sens longitudinal et ensuite dans le sens transversal ou dans le sens transversal et ensuite dans le sens longitudinal ou simultanément dans le sens longitudinal et dans le sens transversal et éventuellement étant étirée à la suite une nouvelle fois dans le sens longitudinal et/ou dans le sens transversal et étant à la suite thermofixée à une température de 200 à 260 °C, le film étant relaxé de 5 à 15 % dans le sens transversal avec une vitesse de relaxation <20%/s et le film subissant pendant le processus de fabrication un réchauffement dans la plage de 225 à 240 °C (mesurée au moyen de l'analyse DSC sur le film fini).

5. Procédé selon la revendication 4, **caractérisé en ce que** la vitesse de relaxation est < 10%/s.

6. Procédé selon la revendication 5, **caractérisé en ce que** la vitesse de relaxation est < 5 %/s.

7. Utilisation d'un film selon l'une quelconque des revendications 1 à 3 pour la fabrication de condensateurs.

8. Utilisation selon la revendication 7 pour la fabrication de condensateurs SMD.